# EUROPEAN PATENT APPLICATION

(11) **EP 2 196 579 A1**
(43) Date of publication of application: **16.06.2010**
(21) Application number: 08021359.8
(22) Date of filing: 09.12.2008
(51) Int. Cl.: D21C 5/00, D21C 9/00, D21H 11/18, C08B 15/00, C08L 1/02, D21D 1/20, D21D 1/34

(54) **Method for producing microfibrillated cellulose**

(71) Applicant: Borregaard Industries Limited, Norge, 1701 Sarpsborg (NO)
(72) Inventor: Wichmann, Jens-Uwe, 1667 Rolsvøy (NO); Haugen, Øivind, 1650 Sellebakk (NO)
(74) Representative: Tostmann, Holger Carl

(57) **Abstract**

The present invention relates to a method for producing microfibrillated cellulose. The inventive method comprises passing a suspension comprising cellulose and solvent through an orifice such that said suspension is subjected to a pressure drop, wherein the diameter of the orifice is from 100 to 700 µm and said pressure drop has a maximum value of 100 MPa.

## Description

The present invention relates to a method for producing microfibrillated cellulose. The method comprises passing a suspension comprising cellulose in a solvent through an orifice of a homogenizer such that said suspension is subjected to a pressure drop. Said diameter of said orifice is from 100 to 700 µm and said pressure drop has a maximum value of 100 MPa. The method allows for producing microfibrillated cellulose wherein the maximum value gel structure may already be achieved by only a few passages through the homogenizer, preferably one passage.

Microfibrillated cellulose is a natural cellulose in which the cellulose fibers have been opened up and unravelled to form fibrils and microfibrils by repeated passage through a homogenizer. These specifically treated celluloses have unique properties and are important commercial products that are utilized in a wide range of industrial fields such as paper manufacturing, paints and gel coats, food industry, pharmaceutical industry and cosmetical applications, among others. In a suspension of cellulose microfibrils in a liquid, in particular in aqueous suspension, microfibrillated cellulose has non-Newtonian flow properties and a gel-like consistency. Such products are particularly suitable in applications where a thickening agent is required.

Methods for producing microfibrillated cellulose comprise methods such as converting cellulose by fermentation or by mechanical means into microfibrillated fibers. On the industrial scale, the conversion of cellulose by mechanical means such as abrasive disc homogenizers or pressure homogenizers is preferred.

The application of homogenizers usually requires to pass a suspension of cellulose in a solvent, for example water, the so-called pulp, several times through said homogenizers to increase the viscosity in order to develop a gel structure, until no further increase in viscosity is achieved. After such a treatment, a homogeneous product is obtained and the conversion process is terminated.

US 2005/0194477 A1 discloses a method for producing a microfibrillated cellulose, which comprises subjecting a slurry containing a pulp having a solid concentration (content) of 1 to 6 weight % to treatment with a disc refiner. Depending on the type of microfibrillated cellulose to be produced, said treatment with a disc refiner has to be repeated many times such as 5 times or more, or ten times or more, or even 30 to 90 times in order to obtain a consistent product, i.e. a product for which the viscosity does not increase upon further passes through the homogenizer.

US 6,183,596 discloses a process wherein a pulp slurry is firstly microfibrillated with a rubbing apparatus, and is subsequently super microfibrillated under high pressure by a two-discs-homogenizer. To obtain the super microfibrillated cellulose, the treatment with said homogenizer has to be carried out 5 times until a stable gel structure is achieved, i.e. until the viscosity is not increased by additional passages.

US 5,964,983 discloses a method for producing a microfibrillated cellulose, wherein a cellulose pulp is fed through a homogenizer wherein the suspension is subjected to a pressure drop which is between 20 MPa and 100 MPa and high-speed shear action followed by a high-speed deceleration impact. The pulp at a concentration of 2 % has to be passed several times through said homogenizer, such as 6 times, to achieve stability.

US 4,481,077 discloses a process for producing microfibrillated cellulose, wherein a liquid suspension of cellulose comprising an additive compound capable of substantially inhibiting hydrogen bonding on the fibrils in the cellulose, is passed through a high pressure homogenizer having a small diameter orifice in which said suspension is subjected to a pressure drop of at least 3,000 psi (20.68 MPa) followed by a high velocity decelerating impact against a solid surface to form a suspension of microfibrillated cellulose. A 2 % suspension was passed through the homogenizer from two to ten times in order to obtain a homogeneous product.

US 4,483,743 and US 4,374,702 disclose a process for producing microfibrillated cellulose and the micrifibrillated cellulose as such, wherein a liquid suspension of cellulose is passed through a small diameter orifice in which a suspension is subjected to a pressure drop of at least 3,000 psi (20.68 MPa) and a high velocity action followed by a high velocity decelerating impact and repeating the passage of said suspension through the orifice until the cellulose suspension becomes a substantially stable suspension. When said suspension emerges from said orifice, it impinges on an impact ring surrounding said orifice resulting in said high velocity decelerating impact.

A problem to be solved by the present invention in view of the known prior art was to provide an improved method for producing a microfibrillated cellulose that reduces the number of the cost-intensive and energy-consuming consecutive passages through the homogenizer but nevertheless allows the manufacture of a microfibrillated cellulose having a gel structure.

This problem is solved by a method for producing microfibrillated cellulose, the method comprising:
(i) passing a suspension comprising cellulose and a solvent through an orifice such that said suspension is subjected to a pressure drop,
wherein the diameter of the orifice is from 100 to 700 µm and said pressure drop has a maximum value of 100 MPa, preferably a drop in the range of 20 to 70 Mpa, further preferably in the range of 30 to 60 MPa.

In a preferred embodiment, the diameter of said orifice is from 100 to 600 µm, in particular from 100 to 500 µm. Particularly preferred orifices have a diameter of 100 µm, or 250 µm, or 500 µm.

In a preferred embodiment, the solvent is selected from a protic and an aprotic solvent, wherein a protic solvent is particularly preferred, in particular water or an alcohol, preferably a lower alcohol, dimethylsulphoxides or glycerol or any mixtures thereof. Water is particularly preferred as a solvent.

By restricting the orifice to said rather narrow diameter range (compared to the diameters as used in the homogenizers of the prior art) and by employing a moderate pressure drop, it is possible, for the first time, to produce a homogeneous microfibrillated cellulose **by only one passage through a homogenizer.** In general, by employing the inventive method, a product is obtained already having the maximum value gel structure respectively a gel structure being close to the maximum value gel structure so that a second passage through the homogenizer that is not warranted for economic reasons and would not be required for most technical applications, as the obtained gel structure of said microfibrillated cellulose already suffices the required specifications after one passage. Such a method is advantageous for an industrial applicability already based on economic benefits.

The term "orifice" means an opening or a nozzle or a valve contained in a homogenizer suitable for homogenizing cellulose.

In the context of the present invention "homogenizing the cellulose" means that the size of the cellulose fibers is reduced, in particular the average fiber length L is reduced to the micrometer scale and the average fiber diameter D is reduced to the nanometer scale, so that microfibrils are formed.

Orifices and homogenizers as commercially available for fluid management applications in general may be used. In such a homogenizer, energy is applied to a low viscosity suspension by a high shear velocity flow through said orifice. Therefore, said orifice must be small enough to create a shearing action. It is possible to adjust the shearing actions by further elements such as cones and the like which are adjustably located close to the entry side of the orifice. Before said suspension enters said orifice, it is at high pressure and low velocity. As the suspension enters said orifice, there is a rapid increase in velocity and a corresponding drop in pressure since the suspension expands by passing through said orifice into ambient pressure. The pressure drop is measured from the entrance to the exit side of said orifice, for example by using a manometer. Typically, the orifice separates a high pressure chamber from a chamber at ambient pressure. In this case, it suffices to have a manometer in the high pressure chamber only. The person skilled in the art is familiar with such measurements.

Without wishing to be bound to a theory, it is believed that due to the decrease of pressure, flow cavitation is created in or at the elements, the suspensions is flowing through. The term "cavitation" is usually defined as the phenomenon of formation of vapor bubbles of a flowing liquid in a region where the pressure of the liquid falls below its vapor pressure. When the cavitation bubbles collapse, they force liquid energy into very small volumes, thereby creating spots of high temperature and emitting shock waves. It is believed that said cavitation causes opening up cellulose fibers and unravelling them to form fibrils and microfibrils to generate microfibrillated cellulose.

Preferably, the orifice is adjustable such that said pressure drop is also adjustable from 20 to 70 MPa.

The pressure drop can preferably be adjusted by the feeding rate of the suspension comprising cellulose and solvent to the orifice and the diameter of the orifice respectively by adjusting the shearing effect of said orifice. A pressure drop of from 30 to 60 MPa is particularly preferred.

It is further preferred to intensify said cavitation effect by allowing said suspension to impinge on an impact element such as a plate or the like after the suspension has been discharged out of the orifice, thus resulting in a high velocity decelerating impact.

Accordingly, in a preferred embodiment, said pressure drop is accompanied by a shearing impact followed by a high velocity decelerating impact.

Therefore, in a preferred embodiment, the method additionally comprises step (ii):
(ii) subjecting the product from (i) to a decelerating impact.

The term "*suspension comprising cellulose and solvent*" means a pulp, preferably a chemical pulp. A pulp is well known in the art. Said pulp preferably includes all types of chemical wood-based pulps, such as bleached, half-bleached and unbleached sulphite, sulphate and soda pulps, craft pulps together with unbleached, half-bleached and bleached chemical pulps, and mixtures of these. In these pulps, preferably, water is used as the solvent.

A particularly preferred source of cellulose is regular, fibre-length pulp, derived from either hardwood or soft-wood, or both types (in mixtures), normally available from a pulping operation or pre-cut if desired. Preferably, said pulp contains pulp from soft wood. The pulp may also contain soft-wood of one kind only or a mixture of different soft wood types. The pulp may e.g. contain a mixture of pine and spruce.

Using wood-based pulp is preferred in accordance with the present invention, since hemicellulose and/or lignin present in wood-based cellulose may help stabilize and homogenize the gel.

Said pulp may be formed by any of the well known digestion techniques including both chemical and mechanical pulping. Virtually any liquid may be used to provide the suspension, provided it is chemically inert in the method according to the invention and imparts sufficient fluidity to act as a carrier for the cellulose. In addition to water or (completely) replacing water, organic liquids such as dimethylsulphoxide, glycerol and lower alcohols may be used.

Wood pulp is also broadly classified in terms of whether it is beaten, fibrillated or not, and classified into unbeaten such as virgin pulp and beaten and fibrillated pulp.

Preferably, the cellulosic suspension should be in a temperature range of from 20 to 100°C. Higher temperatures improve the rate of microfibrillation. Preferably, in the method according to the invention, the cellulosic suspension should be initially heated to a temperature of at least 60°C, even more preferably at least 80°C, prior to the initial introduction of the suspension through said orifice.

The proportion of cellulose in the suspension may vary depending, among other factors, on the size of the homogenizer used for producing microfibrillated cellulose (or any other equipment in which the cellulose is microfibrillated). Preferably, the suspension will contain less than about 10 % cellulose by weight ("solid content"). Further preferably, the amount of cellulose will range from 1 to 8 % by weight in commercial scale operation, more preferred from 2 to 6 % by weight, still more preferred from 3 to 5 % by weight. A high solid content is preferred under economic aspects, if solvent has to be removed from the finely dispersed respectively solvent-dissolved microfibrillated cellulose in order to obtain a solid product. However, it has been found that in order to achieve the intended homogenization in one or two passes, a solid content of 1 to 8% is preferred, further preferably 1 to 5% by weight, further preferably 3 to 5% by weight.

It is preferred to add one or more wood degrading enzymes to said suspension in order to accelerate the conversion of the cellulose to microfibrillated cellulose.

In one embodiment of the method according to the invention, said enzyme is used at a concentration of from 0.1 to 500 ECU/g fibres, preferably from 0.5 to 150 ECU/g fibres, most preferred 0.6 to 100 ECU/g fibres, especially preferred from 0.75 to 10 ECU/g fibres.

In a preferred embodiment, said enzyme is a hemicellulase or a cellulase or a mixture thereof, preferably a mixture of culture filtrate type.

Preferably, said enzyme is a cellulase, preferably a cellulase of endoglucanase type, most preferred a mono-component endoglucanase.

Although the microfibrillated cellulose in general has the maximum value gel structure or a gel structure close to the maximum value gel structure and suffices the technical application after only one passage through said orifice of said homogenizer, the microfibrillated cellulose can be subjected to more than one passage through said orifice. Therefore, in one embodiment, said microfibrillated cellulose obtained from the first passage through said orifice of said homogenizer suspension is subjected to a second passage but not to a subsequent (third and following) passage. In general, a further consecutive passage after the first or the second passage is not necessary. To the contrary, it has been noted that the repeated passage through said orifice may result in the degradation of the gel structure obtained in the first or in the second passage.

In accordance with the invention, it is preferred that any second and subsequent homogenizing step, if even necessary, is performed with an orifice of a different diameter than the orifice from step (i), preferably of a smaller diameter.

In a preferred embodiment of the invention, the suspension comprising cellulose and solvent is passed through the orifice of said homogenizer only once, i.e. a second and any subsequent passage is excluded.

In another preferred embodiment, the suspension comprising cellulose and solvent is passed through the orifice of said homogenizer twice, i.e. a third and any subsequent passage is excluded.

The viscosity respectively the gel structure of the produced microfibrillated cellulose may be determined by methods which are known in the art. For example, the (complex) viscosity of the product can be determined by oscillating creep curves. Said creep curves also are a measure of how much shear stress the gel structure can stand before the structure collapses.

The shape of said oscillating creep curves and the determined value of said measured (complex) viscosity may vary depending on the used equipment for determining said rheology as well as from the sample preparation. For example, the rheological characteristics may depend on the geometry of the used plates and may depend on the concentration of the microfibrillated cellulose in said sample. In the experimental section, a method for preparing the samples and the used equipment for determining the rheological characteristics are disclosed as a reference method in order to obtain reproduceable results. The person skilled in the art is familiar with the boundary conditions arising in rheological measurements.

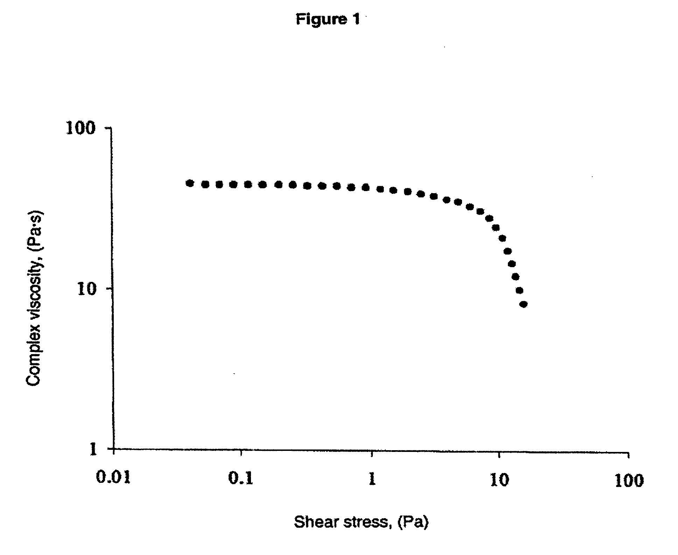

Figure 1 shows a typical creep curve of a product obtained in the method of the invention. The gel structure collapses when a high shear stress is applied resulting in a sharp decrease of the complex viscosity.

In another preferred embodiment according to invention, solvent, in particular water, is removed from the suspension obtained in step (i), i.e. the suspension is dried after the employed cellulose has passed the orifice.

Accordingly, in one embodiment of the method according to the invention, the method comprises step (iii):
(iii) removing solvent from the suspension obtained in (i) or (ii).

All known methods of the prior art can be used for the removal of solvent such as evaporation, spray drying, cross-flow filtration, pressing, freeze drying etc.

Solvent can be removed from the aqueous dispersion/solution to obtain the microfibrillated cellulose in solid form.

Accordingly, in one embodiment, the method comprises step (iv):
(iv) isolating microfibrillated cellulose in solid form after step (iii).

Another subject of the present invention is the use of an orifice for producing microfibrillated cellulose, wherein a suspension comprising cellulose and solvent is passed through said orifice such that said suspension is subjected to a pressure drop, wherein the diameter of said orifice is from 100 to 700 µm and said pressure drop has a maximum value of 100 MPa, preferably 20 to 70 MPa or 30 tp 60 MPa.

Preferably, said suspension is subjected to a decelerating impact after the passage through said orifice.

Another object of the invention is microfibrillated cellulose as obtainable by the method according to the invention.

### Examples

A commercially available low pressure homogenizer from AC Serendip Ltd. (Bremen) was used as the homogenizer. Said homogenizer was equipped with an orifice in the form of a nozzle having a diameter of 250 µm.

An aqueous cellulose suspension in water with a solids content of 3 % by weight was preheated to 80°C. The homogenization procedure was started after sample addition to a feed tank. A feed pressure of 8 bar was applied. The cellulose was fed to the nozzle such that a pressure drop of approx. 55 MPa resulted (as measured with a manometer on the high pressure side of the orifice). During the passage through the nozzle (orifice), an increase in viscosity was noted. While, at the beginning, the suspension was capable of flowing, after passage this was only achievable by means of dough scrapers indicating an increase in structural density.

The suspension comprising cellulose and water was passed twice through said homogenizer. After each passage some of the material was collected.

For rheological characterization, said collected material was treated according to the following method.

The dry content of the suspension comprising microfibrillated cellulose and water was measured by subjecting the collected material to a commercially available halogen moisture analyzer at 190°C. Subsequently, the samples were diluted by adding water so that the final concentration of the microfibrillated cellulose was 1.4 % by weight based on the total amount of microfibrillated cellulose and water. 30 g of the diluted material were transferred to appropriate 50 ml test tubes and were mixed with an Ultra-Turrax^{®} high speed mixer (type T 25 with tool S 25 N 18 G; 18 mm stator diameter) for 4 min at 20,000 rpm. The samples were equilibrated for 24 hours at a shaking board prior to rheological measurements. Afterwards, the dry content of the diluted samples was re-determined using said halogen moisture analyzer prior to rheological measurements to ensure that the concentration of 1.4% by weight was maintained during the sample preparation.

The rheological characterization of the diluted products was performed on a Physica MCR 101 rheometer equipped with a PP50/P2 serrated upper plate and a conventional lower plate. The gap between the plates was 1 mm. The rheology was determined using the following parameters: amplitude gamma 0.015 ... 30 % on log-scale, frequency 1Hz, temperature 20°C, time setting 30 measurement points (no time setting).

The sample was applied to the rheometer by using a spoon so that the structure of the sample was affected as little as possible. Ten minutes after the application of the sample to the rheometer, the measurement was started.

After the first passage through the homogenizer, the diluted product had a complex viscosity of approx. 68 Pa·s, i.e. the viscosity in the horizontal range of the creep curve where viscosity is nearly independent from shear stress. The diluted product of the second passage had a comparable viscosity within a measurement accuracy of ± 10%, i.e. no improvement was seen. This experiment was repeated several times in order to ensure reproducibility and confirm the error bar.

## Claims

1. Method for producing microfibrillated cellulose, the method comprising:
(i) passing a suspension comprising cellulose and a solvent through an orifice such that said suspension is subjected to a pressure drop,
wherein the diameter of the orifice is from 100 to 700 µm and said pressure drop has a maximum value of 100 MPa.

2. Method of claim 1, wherein said orifice diameter is from 100 to 600 µm, or wherein said orifice diameter is from 100 to 500 µm.

3. Method of claim 1 or 2, wherein the solvent comprises water, alcohol, prererably a lower alcohol, an organic liquid, dimethylsulphoxide or glycerol or any combination of two or more thereof.

4. Method of any one of the preceding claims, the method further comprising:
(ii) subjecting the product obtained in (i) to a decelerating impact.

5. Method of any one of the preceding claims, wherein the value for the pressure drop is from 20 to 70 MPa.

6. Method of any one of the preceding claims, wherein the temperature of said orifice is at least 60°C.

7. Method of any one of the preceding claims, wherein said suspension has a concentration of cellulose, i.e. solid content from 1 to 8 weight % or 2 to 6 weight % or 3 to 5 weight % relative to the overall weight of the suspension.

8. Method of any one of the preceding claims, wherein said suspension comprises one or more wood degrading enzymes.

9. Method of any one of the preceding claims, wherein step (i) is performed only one time in the overall process leading to the final product of microfibrillated cellulose.

10. Method of any one of the preceding claims, the method additionally comprising step (iii):
(iii) removing solvent from the suspension obtained in (i) or (ii).

11. Method of claim 10, the method additionally comprising step (iv):
(iv) isolating microfibrillated cellulose in solid form after step (iii).

12. Use of an orifice for producing microfibrillated cellulose, wherein a suspension comprising cellulose and solvent is passed through said orifice such that said suspension is subjected to a pressure drop, wherein the diameter of said orifice is from 100 to 700 µm and said pressure drop has a maximum value of 100 MPa.

13. Use of claim 12, wherein said suspension after the passage through said orifice is subjected to a decelerating impact.

14. Microfibrillated cellulose obtainable by a method comprising:
(i) passing a suspension comprising cellulose and a solvent through an orifice such that said suspension is subjected to a pressure drop,
wherein the diameter of the orifice is from 100 to 700 µm and said pressure drop has a maximum value of 100 MPa.

15. Microfibrillated cellulose according to claim 14, wherein said diameter is from 100 to 500 µm and said pressure drop is from 20 to 70 MPa, or microfibrillated cellulose obtainable by any or all of claims 2 to 11.
